# EUROPEAN PATENT SPECIFICATION

(11) **EP 3 469 583 B1**
(45) Date of publication and mention of the grant of the patent: **11.09.2024**
(21) Application number: 17735364.6
(22) Date of filing: 27.06.2017
(51) Int. Cl.: G10L 15/04, G06F 40/289

(54) **AUDIO SLICER**
AUDIO-SLICER
SYSTÈME DE DÉCOUPAGE AUDIO

(30) Priority: 13.07.2016 US 201615209064
(43) Date of publication of application: 17.04.2019
(73) Proprietor: Google LLC, Mountain View, CA 94043 (US)
(72) Inventor: LEE, Abraham Jung-Gyu, Mountain View, California 94043 (US); SUNG, Sang Soo, Mountain View, California 94043 (US); ZHANG, Yeliang, Sunnyvale, California 94085 (US)
(74) Representative: Kilburn & Strode LLP
(86) International application number: PCT/US2017/039520
(87) International publication number: WO 2018/013343

(56) References cited:
- US-A1- 2010 158 213
- US-A1- 2015 220 507

## Description

### FIELD

This application relates to speech recognition.

### BACKGROUND

Users may exchange messages through messaging applications. In one example, a messaging application may allow a sender to type in a message that is sent to a recipient. Messaging applications may also allow the sender to speak a message, which the messaging applications may transcribe before sending to a recipient.
US 2015/220507 A1 relates to a method for embedding voice mail in a spoken utterance using a natural language processing computer system.
US 2010/158213 A1 relates to systems and methods for intelligent call transcription.

### SUMMARY

Example implementations deploy audio slicing to provide efficient voice-activated audio messaging. Example implementations are capable of responding to a voice command by actively isolating an audio message included in the voice command, and sending the audio message to a recipient. By extracting the audio message payload from the received voice command, a data-efficient (and therefore bandwidth-efficient) messaging system may be provided.

When sending a text message to a recipient, a sender may choose to speak a messaging-related command to the device rather than entering a message using a keyboard. For example, a sender may say "Text Liam good luck." In response, the device would transcribe the sender's speech and recognize "text" as the voice command trigger term, "Liam" as the recipient, and "good luck" as the payload, or object of the voice command trigger term. The device would then send the message "good luck" to a contact of the sender's, named "Liam."

Just sending the transcription of the message may be insufficient to capture the intonation in the sender's voice. In this instance, it may be helpful to send the audio data of the sender speaking "good luck" along with the transcription. In order
to send only the audio data of the object of the voice command trigger term and not audio data of the recipient's name or of the voice command trigger term, the device first identifies the voice command trigger term in the transcription and compares it to other trigger terms that are compatible with sending audio data and transcriptions of the audio data (e.g., "text" and "send a message to," not "call" or "set an alarm"). The device then classifies a portion of the transcription as the object of the voice command trigger term and isolates the audio data corresponding to that portion. The device sends the audio data and the transcription of the object of the voice command trigger term to the recipient. The recipient can then listen to the sender's voice speaking the message and read the transcription of the message. Following the same example above, the device isolates and sends the audio data of "good luck" so that when Liam reads the message "good luck," he can also hear the sender speaking "good luck."

According to an innovative aspect of the subject matter described in this application, a method for audio slicing includes the actions of receiving audio data that corresponds to an utterance; generating a transcription of the utterance; classifying a first portion of the transcription as a voice command trigger term and a second portion of the transcription as an object of the voice command trigger term; identifying a language of the utterance;
determining that the voice command trigger term matches a voice command trigger term for which a result of processing is to include both a transcription of an object of the voice command trigger term and audio data of the object of the voice command trigger term in a generated data structure, and that the object of the voice command trigger term was spoken in a different language than the trigger term;
isolating the audio data of the object of the voice command trigger term; and generating a data structure that includes the transcription of the object of the voice command trigger term and the audio data of the object of the voice command trigger term.

These and other implementations can each optionally include one or more of the following features. The actions further include classifying a third portion of the transcription as a recipient of the object of the voice command trigger term; and transmitting the data structure to the recipient. The data structure is generated based on determining the language of the utterance. The voice command trigger term is a command to send a text message. The object of the voice command trigger term is the text message. The actions further include generating, for display, a user interface that includes a selectable option to generate the data structure that includes the transcription of the object of the voice command trigger term and the audio data of the object of the voice command trigger term; and receiving data indicating a selection of the selectable option to generate the data structure. The data structure is generated in response to receiving the data indicating the selection of the selectable option to generate the data structure. The actions further include generating timing data for each term of the transcription of the utterance. The audio data of the object of the voice command trigger term is isolated based on the timing data. The timing data for each term identifies an elapsed time from a beginning of the utterance to a beginning of the term and an elapsed time from the beginning of the utterance to a beginning of a following term.

Other embodiments of this aspect include corresponding systems, apparatus, and computer programs recorded on computer storage devices, each configured to perform the operations of the methods.

The subject matter described in this application may have one or more of the following advantages. The network bandwidth required to send the sound of a user's voice and a message may be reduced because the user can send the audio of the user speaking with the message and without additionally placing a voice call, thus saving on the overhead required to establish and maintain a voice call. The network bandwidth required may also be reduced because the transcription and the audio data can be sent within one message packet instead of a message packet for the audio data and message packet for the transcription. The network bandwidth may be reduced again by extracting only the audio data of the message for transmission to the recipient instead of sending the audio data of the entire utterance.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 illustrates an example system where a device sends a data structure that includes audio data and a transcription of the audio data to another device.
FIG. 2 illustrates an example system combining audio data and a transcription of the audio data into a data structure.
FIG. 3 illustrates an example process for combining audio data and a transcription of the audio data into a data structure.
FIG. 4 illustrates an example of a computing device and a mobile computing device.

### DETAILED DESCRIPTION

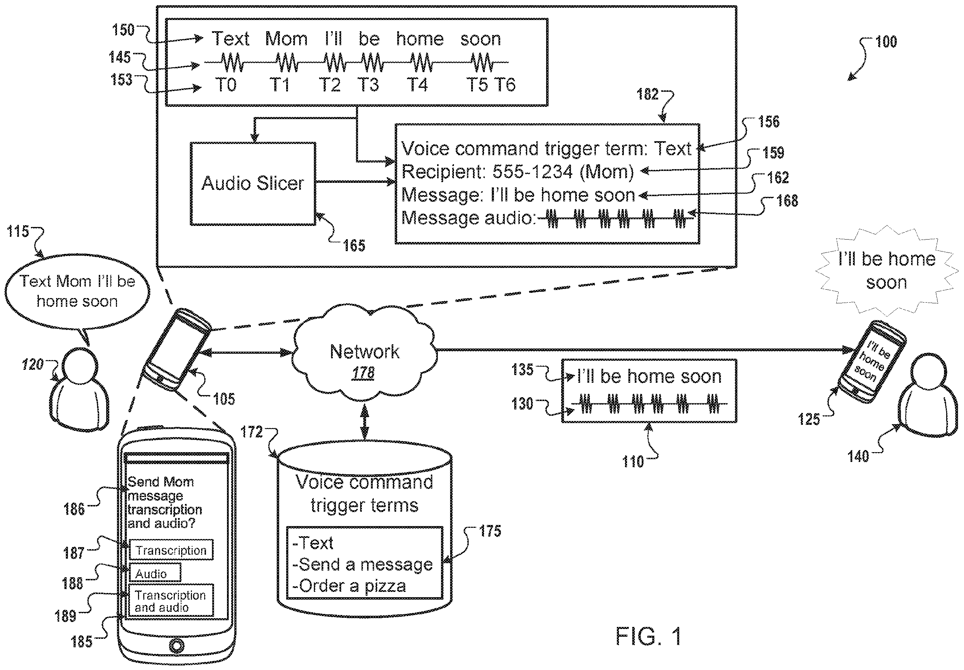

FIG. 1 illustrates an example system 100 where a device 105 sends a data structure 110 that includes audio data 130 and a transcription 135 of the audio data to another device 125. Briefly, and as described in more detail below, the device 105 receives audio data corresponding to an utterance 115 that is spoken by the user 120. The device 105 transcribes the audio data corresponding to the utterance 115 and generates a data structure 110 that includes the transcription 135 of the message portion of the utterance 115 and the audio data 130 of the message portion of the utterance 115. Upon receipt of the data structure 110, the user 140 is able to read the transcription 135 on a display of the device 125, and the device plays the audio data 130 so the user 140 can hear the voice of the user 120 speaking.

The user 120 activates a messaging application on the device 105. The device 105 may be any type of computing device that is configured to receive audio data. For example, device 105 may be a mobile phone, a tablet, a watch, a laptop, a desktop computer, or any other similar device. Once the user 120 activates the messaging application, the device 105 may prompt the user to begin speaking. In some implementations, the device 105 may prompt the user to select from different messaging options. The messaging options may include sending a transcription only, sending a transcription and audio data, sending audio data only, or automatically sending audio data if appropriate. The user speaks the utterance 115 and the device 105 receives the corresponding audio data. The device 105 processes the audio data using an audio subsystem that may include an A-D converter and audio buffers.

The device 105 processes the audio data 145 that corresponds to the utterance 115 and, in some implementations, generates a transcription 150 of the audio data 145. In some implementations, while the user speaks, the device 105 generates the transcription 150 and the recognized text appears on a display of the device 105. For example, as the user 120 speaks "text mom," the words "text mom" appear on the display of the device 105. In some implementations, the transcription 150 does not appear on the display of the device 105 until the user 120 has finished speaking. In this instance, the device 105 may not transcribe the audio data until the user 120 has finished speaking. In some implementations, the device 105 may include an option that the user can select to edit the transcription. For example, the device 105 may have transcribed "text don" instead of "text mom." The user may select the edit option to change the transcription to "text mom." In some implementations, the display of the device 105 may just provide visual indication that the device 105 is transcribing the audio data 145 without displaying the transcription 150. In some implementations, the device 105 provides the audio data 145 to a server, and the server generates the transcription 150. The server may then provide the transcription 150 to the device 105.

Once the device 105 has generated the transcription 150, the device 105, in some implementations, generates timing data 153. The timing data 153 consists of data that indicates an elapsed time from the beginning of the audio data 145 to the start of each word in the transcription 150. For example, T0 represents the elapsed time from the beginning of the audio data 145 to the beginning of the word "text." In some implementations, the device 105 may pre-process the audio data 145 so that T0 is zero. In other words, any periods of silence before the first word are removed from the audio data 145. As another example, T2 represents the time period from the beginning of audio data 145 to the beginning of "I'll." T6 represents the time period from the beginning of the audio data 145 to the end of "soon." In some implementations, the device 105 may pre-process the audio data 145 so that T6 is at the end of the last word. In other words, any periods of silence after the last word are removed from the audio data 145. In some implementations, the device 105 generates the timing data 153 while generating the transcription 150. In some implementations, instead of device 105 generating the timing data 153, the device 105 provides the audio data 145 to a server. The server generates the timing data 153 using a process that is similar to device's 105 process of generating the timing data 153. The server may then provide the timing data 153 to the device 105.

In some implementations, the device 105 may display an interface that provides the transcription 150 and allows the user to select different words of the transcription 150. Upon selection of each word, the device 105 may play the corresponding audio data for the selected word. Doing so will allow the user to verify that the audio data for each word was properly matched to each transcribed word. For example, the device 105 may display "Text Mom I'll be home soon." The user may select the word "home," and in response to the selection, the device 105 may play the audio data 145 between T4 and T5. The user may also be able to select more than one word at a time. for example, the user may select "text mom." In response, the device 105 may play the audio data 145 between T0 and T2. In the case of errors, the user may request that the device generate the timing data 153 again for the whole transcription 150 or only for words selected by the user.

The device 105, in some implementations, analyzes the transcription 150 and classifies portions of the transcription 150 as the voice command trigger term, the object of the voice command trigger term, or the recipient. The voice command trigger term is the portion of the transcription 150 that instructs the device 105 to perform a particular action. For example, the voice command trigger term may be "text," "send a message," "set an alarm," or "call." The object of the voice command trigger term is the portion of the transcription 150 that instructs the device 105 to perform the particular action on the object. For example, the object may be a message, a time, or a date. The recipient instructs the device 105 to send the object or perform the particular action on the recipient. For example, the recipient may be "mom," Alice," or "Bob." In some instances, a transcription may only include a voice command trigger term and a recipient, for example, "call Alice." In other instances, a transcription may only include a voice command trigger term and an object of the voice command trigger term, for example, "set an alarm for 6 AM." In the example shown in FIG. 1, the device 105, analyzes transcription 150 "text mom I'll be home soon," and classifies the term "text" as the voice command trigger term 156, the term "mom" as the recipient 159, and the message "I'll be home soon" as the object of the voice command trigger term 162. The recipient 159 includes a phone number for "mom" based on the device 105 accessing the contacts data of the user 120. In some implementations, a server analyzes and classifies the transcription 150. The server may be the same server, or group of servers, that generated the timing data 153 and transcription 150.

With the portion of the transcription 150 identified as the voice command trigger term 156 and the object of the voice command trigger term 162, the device 105 provides the timing data 153, the audio data 145, and the voice command trigger term 156 and the object of the voice command trigger term 162 to the audio slicer 165. The audio slicer 165 compares the voice trigger term 156 to a group of voice command trigger terms 172 for which audio data of the object of the voice command trigger term is provided to the recipient. Some examples 175 of voice command trigger terms 172 for which audio data of the object of the voice command trigger term is provided to the recipient include "text" and "send a message." For "text" and "send a message" the transcription of the message and the audio data of the message are transmitted to the recipient. Another example 175 of voice command trigger terms 172 for which audio data of the object of the voice command trigger term is provided to the recipient includes "order a pizza." For "order a pizza," the pizza shop may benefit from an audio recording of the order in instances where the utterance was transcribed incorrectly. As illustrated in FIG. 1, the device 105 accesses the group of voice command trigger terms 172 and identifies the voice command trigger term 156 "text" as a voice command trigger term for which audio data of the object of the voice command trigger term is provided to the recipient. The group of voice command trigger terms 172 may be stored locally on the device 105 and updated periodically by either the user 120 or an application update. As illustrated in FIG. 1, the group of voice command trigger terms 172 may also be stored remotely and accessed through a network 178. In this instance, the group of voice command trigger terms 172 may be updated periodically by the developer of the application that sends audio data and a transcription of the audio data.

If device 105 determines that the voice command trigger term 156 matches one of the terms in the group of voice command trigger terms 172 for which audio data of the object of the voice command trigger term is provided to the recipient, and that the object of the voice command trigger term was spoken in a different language than the trigger term, then the audio slicer 165 isolates the audio data corresponding to the object of the voice command trigger term 162 using the timing data 153. Because the timing data 153 identifies the start of each word in the audio data 145, the audio slicer is able to match the words of the object of the voice command trigger term 162 to the corresponding times of the timing data 153 and isolate only that portion of the audio data 145 to generate audio data of the object of the voice command trigger term 162. In the example shown in FIG. 1, the audio slicer 165 receives data indicating the object of the voice command trigger term 162 as "I'll be home soon." The audio slicer 165 identifies the portion of audio data 145 that corresponds to "I'll be home soon" is between T2 and T6. The audio slicer 165 removes the portion of the audio data 145 before T2. If the audio data 165 were to include any data after T6, then the audio slicer would remove that portion also. The audio slicer 165 isolates the message audio of "I'll be home soon" as the audio data corresponding to the object of the voice command trigger term 168. Upon isolating the message audio, the device 105 may display a user interface that includes a play button for the user to listen to the isolated audio data.

With the audio data corresponding to the object of the voice command trigger term 168 isolated, the device 105 generates the data structure 110 based on the data 182. The data structure 110 includes the transcription of the object of the voice command trigger term 135 and the corresponding audio data 130 that the audio slicer 165 isolated. In FIG. 1, the data structure 110 includes the transcription "I'll be home soon" and the corresponding audio data. The device 105 transmits the data structure 110 to the device 125. When the user 140 opens the message that includes the data structure 140, the transcription of the object of the voice command trigger term 135 appears on the display of the device 125 and the audio data 130 plays. In some implementations, the audio data 130 plays automatically upon opening the message. In some implementations, the audio data 130 plays in response to a user selection of a play button or selecting the transcription of the object of the voice command trigger term 135 on the display. In some implementations, the audio data 130 may be included in an audio notification that the device 125 plays in response to receiving the data structure 110.

In some implementations, the device 105 may provide the user 120 with various options when generating the data structure 110. For example, the device 105 may, at any point after receiving the audio data of the utterance 115, provide an option to the user to send audio data along with the transcription of the utterance. For example, as illustrated in user interface 185, the device 105 displays a prompt 186 with selectable buttons 187, 188, and 189. Selecting button 187 causes the recipient to only receive a transcription of the message. Selecting button 188 causes the recipient to receive only the audio of the message. Selecting button 189 causes the recipient to receive both the transcription and the audio. The device 105 may transmit the selection to a server processing the audio data of the utterance 115. In some implementations, the device processing the utterance 115 does not perform or stops performing unnecessary processing of the utterance 115. For example, the device 105 or server may stop or not generating timing data 153 if the user selects option 187.

The device 105 may present the user interface 185 to send audio data upon matching the voice command trigger term 156 to a term in group of voice command trigger terms 172. In some implementations, the user 120 may select particular recipients that should receive audio data and the transcription of the audio data. In this instance, the device 105 may not prompt the user to send the audio data and instead check the settings for the recipient. If the user 120 indicated that the recipient should receive audio data, then the device 105 generates and transmits the data structure 110. If the user 120 indicated that the recipient should not receive audio data, then the device 105 only sends the transcription 135.

In some implementations, the user 140 may provide feedback through the device 125. The feedback may include an indication that the user wishes to continue to receive audio data with future messages or an indication that the user wishes to not receive audio data with future messages. For example, the user 140 may open the message that includes the data structure 110 on the device 125. The device 125 may display an option that the user 140 can select to continue receiving audio data, if the audio data is available, and an option that the user 140 can select to no longer receive audio data. Upon selection, the device 125 may transmit the response to the device 105. The device 105 may update the settings for user 140 automatically, or may present the information to the user 120 and the user 120 manually change the settings for user 140. In another example, the user may open a message that only includes the transcription 135. The device 125 may display an option that the user 140 can select to begin receiving audio data, if the audio data is available, and an option that the user 140 can select to not receive audio data with future messages. Similarly, upon selection, the device 125 may transmit the response to the device 105. The device 105 may update the settings for user 140 automatically, or may present the information to the user 120 and the user 120 manually change the settings for user 140.

In some implementations, the some or all of the actions performed by the device 105 are performed by a server. The device 105 receives the audio data 145 from the user 120 when the user 120 speaks the utterance 115. The device 105 provides the audio data 145 to a server that processes the audio data 145 using a similar process as the one performed by the device 105. The server may provide the transcription 150, timing data 153, classification data, and other data to the device 105 so that the user 120 may provide feedback regarding the transcription 150 and the timing data 153. The device 105 may then provide the feedback to the server.

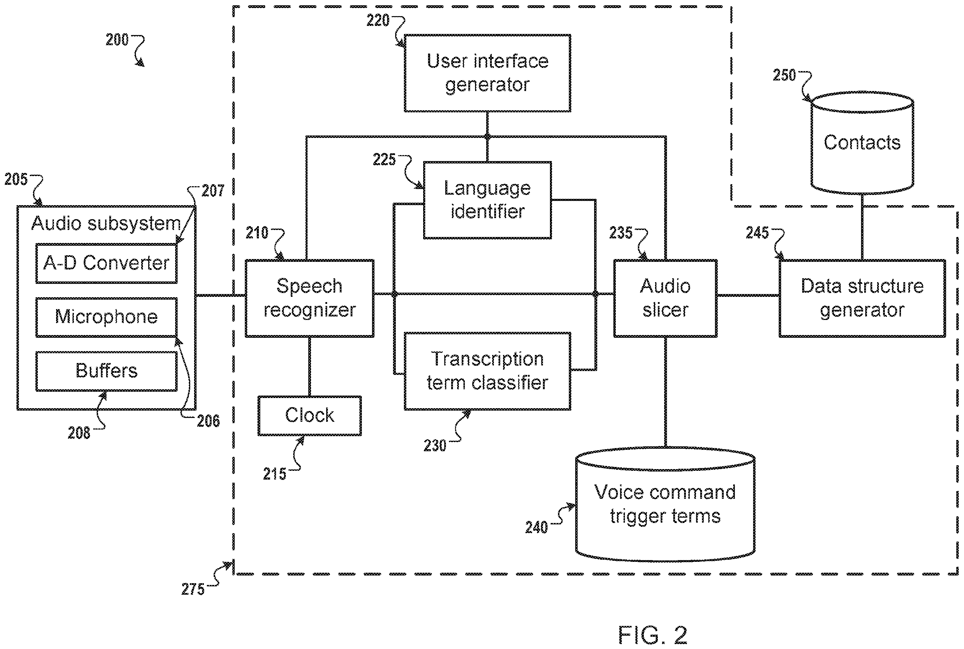

FIG. 2 illustrates an example system 200 combining audio data and a transcription of the audio data into a data structure. The system 200 may be implemented on a computing device such as the device 105 in FIG. 1. The system 200 includes an audio subsystem 205 with a microphone 206 to receive incoming audio when a user speaks an utterance. The audio subsystem 205 converts audio received through the microphone 206 to a digital signal using the analog-to-digital converter 207. The audio subsystem 205 also includes buffers 208. The buffers 208 may store the digitized audio, e.g., in preparation for further processing by the system 200. In some implementations, the system 200 is implemented with different devices. The audio subsystem 205 may be located on a client device, e.g., a mobile phone, and the modules located on server 275 that may include one or more computing devices. The contacts 250 may be located on the client device or server 275 or both.

In some implementations, the audio subsystem 205 may include an input port such as an audio jack. The input port may be connected to, and receive audio from, an external device such as an external microphone, and be connected to, and provide audio to, the audio subsystem 205. In some implementations, the audio subsystem 205 may include functionality to receive audio data wirelessly. For example, the audio subsystem may include functionality, either implemented in hardware or software, to receive audio data from a short range radio, e.g., Bluetooth. The audio data received through the input port or through the wireless connection may correspond to an utterance spoken by a user.

The system 200 provides the audio data processed by the audio subsystem 205 to the speech recognizer 210. The speech recognizer 210 is configured to identify the terms in the audio data. The speech recognizer 210 may user various techniques and models to identify the terms in the audio data. For example, the speech recognizer 210 may use one or more of an acoustic model, a language model, hidden Markov models, or neural networks. Each of these may be trained using data provided by the user and using user feedback provided during the speech recognition process and the process of generating the timing data 153, both of which are described above.

During or after the speech recognition process, the speech recognizer 210 may use the clock 215 to identify the beginning points in the audio data where each term begins. The speech recognizer 210 may set the beginning of the audio data to time zero and the beginning of each word or term in the audio data is associated with an elapsed time from the beginning of the audio data to the beginning of the term. For example, with the audio data that corresponds to "send a message to Alice I'm running late," the term "message" may be paired with a time period that indicates an elapsed time from the beginning of the audio data to the beginning of "message" and an elapsed time from the beginning of the audio data to the beginning of "to."

In some implementations, the speech recognizer 210 may provide the identified terms to the user interface generator 220. The user interface generator 220 may generated an interface that includes the identified terms. The interface may include the selectable options to play the audio data that corresponds to each of the identified terms. Using the above example, the user may select to play the audio data corresponding to "Alice." Upon receiving the selection, the system 200 plays the audio data that corresponds to the beginning of "Alice" to the beginning of "I'm." The user may provide feedback if some of the audio data does not correspond to the proper term. For example, the user interface generator may provide an audio editing graph or chart of the audio data versus time where the user can select the portion that corresponds to a particular term. This may be helpful when the audio data that the system identified as corresponding to "running" actually corresponds to only "run." The user may then manually extend the corresponding audio portion to capture the "ing" portion. When the user provides feedback in this manner or in any other feedback mechanism, the speech recognizer may user the feedback to train the models.

In some implementations, the speech recognizer 210 may be configured to recognize only one or more languages. The languages may be based on a setting selected by the user in the system. For example, the speech recognizer 210 may be configured to only recognize English. In this instance, when a user speaks Spanish, the speech recognizer still attempts to identify English words and sounds that correspond to the Spanish utterance. A user may speak "text Bob se me hace tarde" ("text Bob I'm running late") and the speech recognizer may transcribe "text Bob send acetone." If the speech recognizer is unsuccessful at matching the Spanish portion of the utterance to "send acetone" transcription, then user may use the audio chart to match the audio data that corresponds to "se me" to the "send" transcription and the audio data that corresponds to "hace tarde" to the "acetone" transcription.

The speech recognizer 210 provides the transcription to the transcription term classifier 230. The transcription term classifier 230 classifies each word or group of words as a voice command trigger term, an object of a voice command trigger term, or a recipient. In some implementations, the transcription term classifier 230 may be unable to identify a voice command trigger term. In this case, the system 200 may display an error to the user can request that the user speak the utterance again or speak an utterance with a different command. As describe above as related to FIG. 1, some voice command trigger terms may not require an object or a recipient. In some implementations, the transcription term classifier 230 may access a list of voice command trigger terms that are stored either locally on the system or stored remotely to assist in identifying voice command trigger terms. The list of voice command trigger terms includes a list of voice command trigger terms for which the system is able to perform an action. In some implementations, the transcription term classifier 230 may access a contacts list that is stored either locally on the system or remotely to assist in identifying recipients. In some instances, the transcription term classifier 230 identifies the voice command trigger term and the recipient and there are still terms remaining in the transcription. In this case, the transcription term classifier 230 may classify the remaining terms as the object of the voice command trigger term. This may be helpful when the object was spoken in another language. Continuing with the "text Bob se me hace tarde" utterance example where the transcription was "text Bob send acetone." The transcription term classifier 230 may classify the "send acetone" portion as the object after classifying "text" as the voice command trigger term and "Bob" as the recipient.

The speech recognizer 210 provides the transcription and the audio data to the language identifier 225. In some implementations, the speech recognizer 210 may provide confidence scores for each of the transcribed terms. The language identifier 225 may compare the transcription, the audio data, and the confidence scores to determine a language or languages of the utterance. Low confidence scores may indicate the presence of a language other than the language used by the speech reconsider 210. The language identifier 225 may receive a list of possible languages that the user inputs through the user interface. For example, a user may indicate that that the user speaks in English and Spanish, then the language identifier 225 may label portions of the transcription as either English or Spanish. In some implementations, the user may indicate to the system contacts who are likely to receive message in languages other than the primary language of the speech recognizer 210. For example, a user may indicate that the contact Bob is likely to receive messages in Spanish. The language identifier 225 may use this information and the confidence scores to identify the "send acetone" portion of the above example as Spanish.

The audio slicer 235 receives data from the language identifier 225, the transcription term classifier 230 and the speech recognizer 210. The language identifier 225 provides data indicating the languages identifies in the audio data. The transcription term classifier 230 provides data indicating the voice command trigger term, the object of the voice command trigger term, and the recipient. The speech recognizer provides the transcription, the audio data, and the timing data. The audio slicer 235 isolates the object of the voice command trigger term by removing the portions of the audio data that do not correspond to the object of the voice command trigger term. The audio slicer 235 isolates the object using the timing data to identify the portions of the audio data that do not correspond to the object of the voice command trigger term.

The audio slicer 235 determines whether to isolate the object of the voice command trigger term based on a number of factors. One of those factors is the comparison of the voice command trigger term to the group of voice command trigger terms 240. If the voice command trigger term matches one in the group of voice command trigger terms 240, then the audio slicer isolates the audio data of the object of the voice command trigger term.

Another factor may be based on input received from the user interface. The audio slicer 235 may provide data to the user interface generator 220 to display information related to isolating the audio data of the object of the voice command trigger term. For example, the user interface generator 220 may display a prompt asking the user whether the user wants to send audio corresponding to "send acetone." The user interface may include an option to play the audio data corresponding to "send acetone." In this instance, the audio data may isolate the audio data of the object of the voice command trigger term on a trial basis and pass the isolated audio data to the next stage if the user requests.

According to the invention, another factor is based on the languages identified by the language identifier 225. A user may request that the audio slicer 235 isolate the audio data of the object of the voice command trigger term if the user speaks the object of the voice command trigger term in a different language than the other portions of the utterance, such as the voice command trigger term. For example, when a user speaks "text Bob se me hace tarde" and the language identifier 225 identifies the languages as Spanish and English, the audio slicer 235 may isolate the audio data of the object of the voice command trigger term in response to a setting inputted by the user to isolate the audio data of the object of the voice command trigger term with the object is in a different language than the trigger term or when the object is in a particular language, such as Spanish.

Another factor may be based on the recipient. A user may request that the audio slicer 235 isolate the audio data of the object of the voice command trigger term if the recipient is identified as one to receive audio data of the object. For example, the user may provide, through a user interface, instructions to provide the recipient Bob with the audio data of the object. Then if the audio slicer 235 receives a transcription with the recipient identified as Bob, the audio slicer 235 isolates the object of the voice command trigger term and provides the audio data to the next stage.

In some implementations, the audio slicer 235 may isolate the audio data of the object of the voice command trigger term based on both the identified languages of the audio data and the recipient. For example, a user may provide, through a user interface, instructions to provide the recipient Bob with the audio data of the object, if the object is in a particular language, such as Spanish. Using the same example, the audio slicer would isolate "se me hace tarde" because the recipient is Bob and "se me hace tarde" is Spanish.

In some implementations, the audio slicer 235 may allow the user to listen to the audio data of the object of the voice command trigger term before sending. The audio slicer 235 may provide the transcription of the object of the voice command trigger term and the audio data of the object of the voice command trigger term to the user interface generator 220. The user interface generator 235 may provide an interface that allows the user to select the transcription of the object to hear the corresponding audio data. The interface may also provide the user the option of sending the audio data of the object to the recipient that may also be provided on the user interface.

The audio slicer 235 provides the transcription of the object of the voice command trigger term, the audio data of the object of the voice command trigger term, the recipient, and the voice command trigger term to the data structure generator 245. The data structure generator 245 generates a data structure, according to the voice command trigger term, that is ready to send to the recipient and includes the audio data and the transcription of the object of the voice command trigger term. The data structure generator 245 accesses the contacts list 250 to identify a contact number or address of the recipient. Following the same example, the data structure generator 245, by following the instructions corresponding to the "text" voice command trigger term, generates a data structure that includes the transcription and audio data of "se me hace tarde" and identifies the contact information for the recipient Bob in the contacts list 250. The data structure generator 245 provides the data structure to the portion of the system that sends the data structure to Bob's device.

In some implementations, the speech recognizer 210, clock 215, language identifier 225, transcription term classifier 230, audio slicer 235, voice command trigger terms 240, and data structure generator 245 are located on a server 275, which may include one or more computing devices. The audio subsystem 205 and contacts 250 are located on a user device. In some implementations, the contacts 250 may be located on both the user device and the server 275. In some implementations, the user interface generator 220 is located on the user device. In this instance the server 275 provides data for display on the user device to the user interface generator 220 which then generates a user interface for the user device. The user device and the server 275 communicate over a network, for example, the internet.

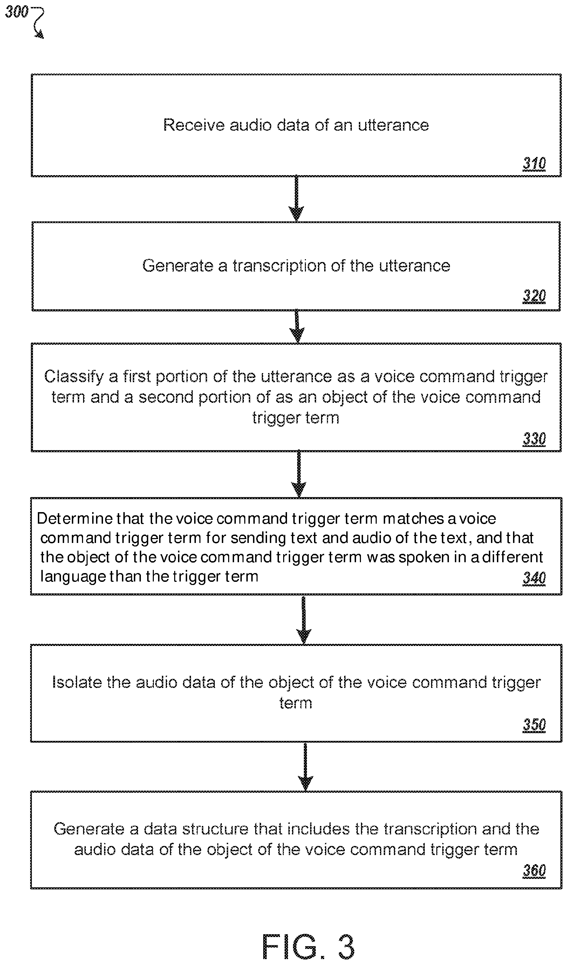

FIG. 3 illustrates an example process 300 for combining audio data and a transcription of the audio data into a data structure. In general, the process 300 generates a data structure that includes a transcription of an utterance and audio data of the utterance and transmits the data structure to a recipient. The process 300 will be described as being performed by a computer system comprising at one or more computers, for example, the devices 105, system 200, or server 275 as shown in FIGS. 1 and 2, respectively.

The system receives audio data that corresponds to an utterance (310). For example, the system may receive audio data from a user speaking "send a message to Alice that the check is in the mail." The system generates a transcription of the utterance (320). In some implementations, while or after the system generates the transcription of the utterance, the system generates timing data for each term of the transcription. The timing data may indicate the elapsed time from the beginning of the utterance to the beginning of the each term. For example, the timing data for "message" would be the time from the beginning of the utterance to the beginning of "message."

The system classifies a first portion of the transcription as a voice command trigger term and a second portion of the transcription as an object of the voice command trigger term (330). In some implementations, the system classifies a third portion of the transcription as the recipient. Following the same example, the system classifies "send a message to" as the voice command trigger term. The system also classifies "Alice" as the recipient. In some implementations, the system may classify "that" as part of the voice command trigger term, such that the voice command trigger term is "send a message to ... that." In this instance, the system classifies the object of the voice command trigger term as "the check is in the mail." As illustrated in this example, the voice command trigger term is a command to send a message, and the object of the voice command trigger term is the message.

The system determines that the voice command trigger term matches a voice command trigger term for which a result of processing is to include both a transcription of an object of the voice command trigger term and audio data of the object of the voice command trigger term in a generated data structure, and that the object of the voice trigger term was spoken in a different language than the trigger term (340). For example, the system may access a group of voice command trigger terms that when processed cause the system to send both the audio data and the transcription of the object of the voice command trigger. Following the above example, if the group includes the voice command trigger term, "send a message to," then the system identifies a match.

The system isolates the audio data of the object of the voice command trigger term (350). In some implementations, the system isolates the audio data using the timing data. For example, the system removes the audio data from before "the check" and after "mail" by matching the timing data of "the check" and "mail" to the audio data. In some implementations, the system identifies the language of the utterance or of a portion of the utterance. Based on the language, the system may isolate the audio data of the object of the voice command trigger term. For example, the system may isolate the audio data if a portion of the utterance was spoken in Spanish.

The system generates a data structure that includes the transcription of the object of the voice command trigger term and the audio data of the object of the voice command trigger term (360). The system may generate the data structure based on the voice command trigger term. For example, with a voice command trigger term of "send a message to," the data structure may include the transcription and audio data of "the check is in the mail." The system may then send the data structure to the recipient. In some implementations, the system may generate the data structure based on the language of the utterance or of a portion of the utterance. For example, the system may generate the data structure that includes the transcription and audio data of the object of the voice command trigger term based on the object being spoken in Spanish.

In some implementations, the system may generate a user interface that allows the user to instruct the system to send both the transcription and the audio data of the object of the voice command trigger term to the recipient. In this instance, the system may respond the instruction by isolating the voice command trigger term or generating the data structure.

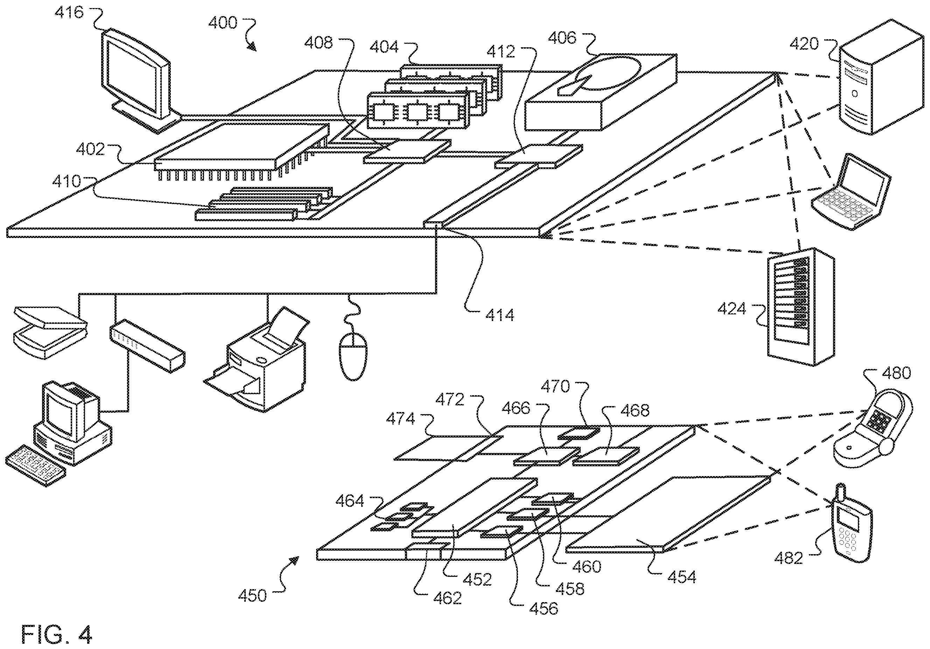

FIG. 4 shows an example of a computing device 400 and a mobile computing device 450 that can be used to implement the techniques described here. The computing device 400 is intended to represent various forms of digital computers, such as laptops, desktops, workstations, personal digital assistants, servers, blade servers, mainframes, and other appropriate computers. The mobile computing device 450 is intended to represent various forms of mobile devices, such as personal digital assistants, cellular telephones, smart-phones, and other similar computing devices. The components shown here, their connections and relationships, and their functions, are meant to be examples only, and are not meant to be limiting.

The computing device 400 includes a processor 402, a memory 404, a storage device 406, a high-speed interface 408 connecting to the memory 404 and multiple high-speed expansion ports 410, and a low-speed interface 412 connecting to a low-speed expansion port 414 and the storage device 406. Each of the processor 402, the memory 404, the storage device 406, the high-speed interface 408, the high-speed expansion ports 410, and the low-speed interface 412, are interconnected using various busses, and may be mounted on a common motherboard or in other manners as appropriate. The processor 402 can process instructions for execution within the computing device 400, including instructions stored in the memory 404 or on the storage device 406 to display graphical information for a GUI on an external input/output device, such as a display 416 coupled to the high-speed interface 408. In other implementations, multiple processors and/or multiple buses may be used, as appropriate, along with multiple memories and types of memory. Also, multiple computing devices may be connected, with each device providing portions of the necessary operations (e.g., as a server bank, a group of blade servers, or a multi-processor system).

The memory 404 stores information within the computing device 400. In some implementations, the memory 404 is a volatile memory unit or units. In some implementations, the memory 404 is a non-volatile memory unit or units. The memory 404 may also be another form of computer-readable medium, such as a magnetic or optical disk.

The storage device 406 is capable of providing mass storage for the computing device 400. In some implementations, the storage device 406 may be or contain a computer-readable medium, such as a floppy disk device, a hard disk device, an optical disk device, or a tape device, a flash memory or other similar solid state memory device, or an array of devices, including devices in a storage area network or other configurations. Instructions can be stored in an information carrier. The instructions, when executed by one or more processing devices (for example, processor 402), perform one or more methods, such as those described above. The instructions can also be stored by one or more storage devices such as computer- or machine-readable mediums (for example, the memory 404, the storage device 406, or memory on the processor 402).

The high-speed interface 408 manages bandwidth-intensive operations for the computing device 400, while the low-speed interface 412 manages lower bandwidth-intensive operations. Such allocation of functions is an example only. In some implementations, the high-speed interface 408 is coupled to the memory 404, the display 416 (e.g., through a graphics processor or accelerator), and to the high-speed expansion ports 410, which may accept various expansion cards. In the implementation, the low-speed interface 412 is coupled to the storage device 406 and the low-speed expansion port 414. The low-speed expansion port 414, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 400 may be implemented in a number of different forms, as shown in the figure. For example, it may be implemented as a standard server 420, or multiple times in a group of such servers. In addition, it may be implemented in a personal computer such as a laptop computer 422. It may also be implemented as part of a rack server system 424. Alternatively, components from the computing device 400 may be combined with other components in a mobile device, such as a mobile computing device 450. Each of such devices may contain one or more of the computing device 400 and the mobile computing device 450, and an entire system may be made up of multiple computing devices communicating with each other.

The mobile computing device 450 includes a processor 452, a memory 464, an input/output device such as a display 454, a communication interface 466, and a transceiver 468, among other components. The mobile computing device 450 may also be provided with a storage device, such as a micro-drive or other device, to provide additional storage. Each of the processor 452, the memory 464, the display 454, the communication interface 466, and the transceiver 468, are interconnected using various buses, and several of the components may be mounted on a common motherboard or in other manners as appropriate.

The processor 452 can execute instructions within the mobile computing device 450, including instructions stored in the memory 464. The processor 452 may be implemented as a chipset of chips that include separate and multiple analog and digital processors. The processor 452 may provide, for example, for coordination of the other components of the mobile computing device 450, such as control of user interfaces, applications run by the mobile computing device 450, and wireless communication by the mobile computing device 450.

The processor 452 may communicate with a user through a control interface 458 and a display interface 456 coupled to the display 454. The display 454 may be, for example, a TFT (Thin-Film-Transistor Liquid Crystal Display) display or an OLED (Organic Light Emitting Diode) display, or other appropriate display technology. The display interface 456 may comprise appropriate circuitry for driving the display 454 to present graphical and other information to a user. The control interface 458 may receive commands from a user and convert them for submission to the processor 452. In addition, an external interface 462 may provide communication with the processor 452, so as to enable near area communication of the mobile computing device 450 with other devices. The external interface 462 may provide, for example, for wired communication in some implementations, or for wireless communication in other implementations, and multiple interfaces may also be used.

The memory 464 stores information within the mobile computing device 450. The memory 464 can be implemented as one or more of a computer-readable medium or media, a volatile memory unit or units, or a non-volatile memory unit or units. An expansion memory 474 may also be provided and connected to the mobile computing device 450 through an expansion interface 472, which may include, for example, a SIMM (Single In Line Memory Module) card interface. The expansion memory 474 may provide extra storage space for the mobile computing device 450, or may also store applications or other information for the mobile computing device 450. Specifically, the expansion memory 474 may include instructions to carry out or supplement the processes described above, and may include secure information also. Thus, for example, the expansion memory 474 may be provide as a security module for the mobile computing device 450, and may be programmed with instructions that permit secure use of the mobile computing device 450. In addition, secure applications may be provided via the SIMM cards, along with additional information, such as placing identifying information on the SIMM card in a non-hackable manner.

The memory may include, for example, flash memory and/or NVRAM memory (non-volatile random access memory), as discussed below. In some implementations, instructions are stored in an information carrier. The instructions, when executed by one or more processing devices (for example, processor 452), perform one or more methods, such as those described above. The instructions can also be stored by one or more storage devices, such as one or more computer- or machine-readable mediums (for example, the memory 464, the expansion memory 474, or memory on the processor 452). In some implementations, the instructions can be received in a propagated signal, for example, over the transceiver 468 or the external interface 462.

The mobile computing device 450 may communicate wirelessly through the communication interface 466, which may include digital signal processing circuitry where necessary. The communication interface 466 may provide for communications under various modes or protocols, such as GSM voice calls (Global System for Mobile communications), SMS (Short Message Service), EMS (Enhanced Messaging Service), or MMS messaging (Multimedia Messaging Service), CDMA (code division multiple access), TDMA (time division multiple access), PDC (Personal Digital Cellular), WCDMA (Wideband Code Division Multiple Access), CDMA2000, or GPRS (General Packet Radio Service), among others. Such communication may occur, for example, through the transceiver 468 using a radio-frequency. In addition, short-range communication may occur, such as using a Bluetooth, WiFi, or other such transceiver. In addition, a GPS (Global Positioning System) receiver module 470 may provide additional navigation- and location-related wireless data to the mobile computing device 450, which may be used as appropriate by applications running on the mobile computing device 450.

The mobile computing device 450 may also communicate audibly using an audio codec 460, which may receive spoken information from a user and convert it to usable digital information. The audio codec 460 may likewise generate audible sound for a user, such as through a speaker, e.g., in a handset of the mobile computing device 450. Such sound may include sound from voice telephone calls, may include recorded sound (e.g., voice messages, music files, etc.) and may also include sound generated by applications operating on the mobile computing device 450.

The mobile computing device 450 may be implemented in a number of different forms, as shown in the figure. For example, it may be implemented as a cellular telephone 480. It may also be implemented as part of a smart-phone 482, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms machine-readable medium and computer-readable medium refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term machine-readable signal refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network (LAN), a wide area network (WAN), and the Internet.

The computing system can include clients and servers. A client and server are generally remote from each other and typically interact through a communication network. The relationship of client and server arises by virtue of computer programs running on the respective computers and having a client-server relationship to each other.

Although a few implementations have been described in detail above, other modifications are possible. For example, while a client application is described as accessing the delegate(s), in other implementations the delegate(s) may be employed by other applications implemented by one or more processors, such as an application executing on one or more servers. In addition, the logic flows depicted in the figures do not require the particular order shown, or sequential order, to achieve desirable results. Accordingly, other implementations are within the scope of the following claims.

## Claims

1. A computer-implemented audio slicing method comprising:
receiving (310) audio data that corresponds to an utterance;
generating (320) a transcription of the utterance;
classifying (330) a first portion of the transcription as a voice command trigger term and a second portion of the transcription as an object of the voice command trigger term;
identifying a language of the voice command trigger term and a language of the object of the voice command trigger term;
determining (340) whether to isolate the object of the voice command trigger term based on two factors, the first factor being that the voice command trigger term matches a voice command trigger term for which a result of processing is to include both a transcription of an object of the voice command trigger term and audio data of the object of the voice command trigger term in a generated data structure and the second factor being that the object of the voice command trigger term was spoken in a different language than other portions of the utterance;
based on the result of the determining (340), isolating (350), from the audio data corresponding to the utterance, the audio data of the object of the voice command trigger term;
generating (360) a data structure that includes the transcription of the object of the voice command trigger term and the audio data of the object of the voice command trigger term; and
transmitting the data structure to a recipient.

2. The method of claim 1, comprising:
classifying a third portion of the transcription as a recipient of the object of the voice command trigger term.

3. The method of any one of the preceding claims, wherein:
the voice command trigger term is a command to send a text message, and the object of the voice command trigger term is the text message.

4. The method of any one of the preceding claims, comprising:
generating a user interface that includes a selectable option to generate the data structure that includes the transcription of the object of the voice command trigger term and the audio data of the object of the voice command trigger term; and
receiving data indicating a selection of the selectable option to generate the data structure,
wherein the data structure is generated in response to receiving the data indicating the selection of the selectable option to generate the data structure.

5. The method of any one of the preceding claims, comprising:
generating timing data for each term of the transcription of the utterance, wherein the audio data of the object of the voice command trigger term is isolated based on the timing data.

6. The method of claim 5, wherein the timing data for each term identifies an elapsed time from a beginning of the utterance to a beginning of the term and an elapsed time from the beginning of the utterance to a beginning of a following term.

7. A system comprising:
one or more computing devices (105) comprising one or more processors and one or more storage devices storing instructions that, when executed by the one or more processors, cause the one or more computing devices to perform operations comprising:
receiving audio data that corresponds to an utterance;
generating a transcription of the utterance;
classifying a first portion of the transcription as a voice command trigger term and a second portion of the transcription as an object of the voice command trigger term;
identifying a language of the voice command trigger term and a language of the object of the voice command trigger term;
determining whether to isolate the object of the voice command trigger term based on two factors, the first factor being that the voice command trigger term matches a voice command trigger term for which a result of processing is to include both a transcription of an object of the voice command trigger term and audio data of the object of the voice command trigger term in a generated data structure and the second factor being that the object of the voice command trigger term was spoken in a different language than other portions of the utterance;
based on the result of the determining, isolating, from the audio data corresponding to the utterance, the audio data of the object of the voice command trigger term ;
generating a data structure that includes the transcription of the object of the voice command trigger term and the audio data of the object of the voice command trigger term; and
transmitting the data structure to a recipient.

8. The system of claim 7, wherein the operations further comprise:
classifying a third portion of the transcription as a recipient of the object of the voice command trigger term.

9. The system of any one of claims 7 to 8, wherein:
the voice command trigger term is a command to send a text message, and
the object of the voice command trigger term is the text message.

10. The system of any one of claims 7 to 9, wherein the operations further comprise:
generating a user interface that includes a selectable option to generate the data structure that includes the transcription of the object of the voice command trigger term and the audio data of the object of the voice command trigger term; and
receiving data indicating a selection of the selectable option to generate the data structure,
wherein the data structure is generated in response to receiving the data indicating the selection of the selectable option to generate the data structure.

11. The system of any one of claims 7 to 10, wherein the operations further comprise: generating timing data for each term of the transcription of the utterance, wherein the audio data of the object of the voice command trigger term is isolated based on the timing data.

12. The system of claim 11, wherein the timing data for each term identifies an elapsed time from a beginning of the utterance to a beginning of the term and an elapsed time from the beginning of the utterance to a beginning of a following term.

13. A non-transitory computer-readable medium storing software comprising instructions executable by one or more processors which, upon such execution, cause one or more computing devices (105) comprising the one or more processors to perform a method according to any of claims 1 to 6.

## Patentansprüche

1. Computerimplementiertes Audio-Slicing-Verfahren, umfassend:
Empfangen (310) von Audiodaten, die einer Äußerung entsprechen; Erzeugen (320) einer Transkription der Äußerung;
Klassifizieren (330) eines ersten Abschnitts der Transkription als ein Sprachbefehl-Auslösebegriff und eines zweiten Abschnitts der Transkription als ein Gegenstand des Sprachbefehl-Auslösebegriffs;
Identifizieren einer Sprache des Sprachbefehl-Auslösebegriffs und einer Sprache des Gegenstands des Sprachbefehl-Auslösebegriffs;
Bestimmen (340), ob der Gegenstand des Sprachbefehl-Auslösebegriffs basierend auf zwei Faktoren zu isolieren ist, wobei der erste Faktor darin besteht, dass der Sprachbefehl-Auslösebegriff mit einem Sprachbefehl-Auslösebegriff übereinstimmt, für den ein Ergebnis der Verarbeitung sowohl eine Transkription eines Gegenstands des Sprachbefehl-Auslösebegriffs als auch Audiodaten des Gegenstands des Sprachbefehl-Auslösebegriffs in einer erzeugten Datenstruktur beinhalten soll, und der zweite Faktor darin besteht, dass der Gegenstand des Sprachbefehl-Auslösebegriffs in einer anderen Sprache als andere Abschnitte der Äußerung gesprochen wurde;
basierend auf dem Ergebnis des Bestimmens (340), Isolieren (350) der Audiodaten des Gegenstandes des Sprachbefehl-Auslösebegriffs aus den Audiodaten, die der Äußerung entsprechen;
Erzeugen (360) einer Datenstruktur, die die Transkription des Gegenstands für einen Sprachbefehl-Auslösebegriff und die Audiodaten des Gegenstands für einen Sprachbefehl-Auslösebegriff beinhaltet; und
Übertragen der Datenstruktur an einen Empfänger.

2. Verfahren nach Anspruch 1, umfassend:
Klassifizieren eines dritten Abschnitts der Transkription als Empfänger des Gegenstandes für einen Sprachbefehl-Auslösebegriffs.

3. Verfahren nach einem der vorstehenden Ansprüche, wobei:
der Sprachbefehl-Auslösebegriff ein Befehl, um eine Textnachricht zu senden, und der Gegenstand des Sprachbefehl-Auslösebegriffs die Textnachricht ist.

4. Verfahren nach einem der vorhergehenden Ansprüche, umfassend:
Erzeugen einer Benutzeroberfläche, die eine auswählbare Option beinhaltet, um die Datenstruktur zu erzeugen, die die Transkription des Gegenstands für einen Sprachbefehl-Auslösebegriff und die Audiodaten des Gegenstands für einen Sprachbefehl-Auslösebegriff beinhaltet; und
Empfangen von Daten, die eine Auswahl der ausgewählten Option angeben, um die Datenstruktur zu erzeugen,
wobei die Datenstruktur in Reaktion auf das Empfangen der Daten, die die Auswahl der auswählbaren Option angeben, erzeugt wird, um die Datenstruktur zu erzeugen.

5. Verfahren nach einem der vorhergehenden Ansprüche, umfassend: Erzeugen von Zeitdaten für jeden Gegenstand der Transkription der Äußerung, wobei die Audiodaten des Gegenstands für einen Sprachbefehl-Auslösebegriff basierend auf den Zeitdaten isoliert werden.

6. Verfahren nach Anspruch 5, wobei die Zeitdaten für jeden Begriff eine verstrichene Zeit von einem Beginn der Äußerung bis zu einem Beginn des Begriffs und eine verstrichene Zeit vom Beginn der Äußerung bis zu einem Beginn eines folgenden Begriffs identifizieren.

7. System, umfassend:
eine oder mehrere Rechenvorrichtungen (105), umfassend einen oder mehrere Prozessoren und eine oder mehrere Speichervorrichtungen, die Anweisungen speichern, die, wenn sie von dem einen oder den mehreren Prozessoren ausgeführt werden, die eine oder mehrere Rechenvorrichtungen veranlassen, Vorgänge durchzuführen, die Folgendes umfassen:
Empfangen von Audiodaten, die einer Äußerung entsprechen;
Erzeugen einer Transkription der Äußerung;
Klassifizieren eines ersten Abschnitts der Transkription als ein Sprachbefehl-Auslösebegriff und eines zweiten Abschnitts der Transkription als ein Gegenstand des Sprachbefehl-Auslösebegriffs;
Identifizieren einer Sprache des Sprachbefehl-Auslösebegriffs und einer Sprache des Gegenstands des Sprachbefehl-Auslösebegriffs;
Bestimmen, ob der Gegenstand des Sprachbefehl-Auslösebegriffs basierend auf zwei Faktoren zu isolieren ist, wobei der erste Faktor darin besteht, dass der Sprachbefehl-Auslösebegriff mit einem Sprachbefehl-Auslösebegriff übereinstimmt, für den ein Ergebnis der Verarbeitung sowohl eine Transkription eines Gegenstands des Sprachbefehl-Auslösebegriffs als auch Audiodaten des Gegenstands des Sprachbefehl-Auslösebegriffs in einer erzeugten Datenstruktur beinhalten soll, und der zweite Faktor darin besteht, dass der Gegenstand des Sprachbefehl-Auslösebegriffs in einer anderen Sprache als andere Abschnitte der Äußerung gesprochen wurde;
basierend auf dem Ergebnis des Bestimmens, Isolieren der Audiodaten des Gegenstandes des Sprachbefehl-Auslösebegriffs aus den Audiodaten, die der Äußerung entsprechen;
Erzeugen einer Datenstruktur, die die Transkription des Gegenstands für einen Sprachbefehl-Auslösebegriff und die Audiodaten des Gegenstands für einen Sprachbefehl-Auslösebegriff beinhaltet; und
Übertragen der Datenstruktur an einen Empfänger.

8. System nach Anspruch 7, wobei die Vorgänge ferner Folgendes umfassen:
Klassifizieren eines dritten Abschnitts der Transkription als Empfänger des Gegenstandes für einen Sprachbefehl-Auslösebegriffs.

9. System nach einem der Ansprüche 7 bis 8, wobei:
der Sprachbefehl-Auslösebegriff ein Befehl ist, eine Textnachricht zu senden, und
der Gegenstand des Sprachbefehl-Auslösebegriffs die Textnachricht ist.

10. System nach einem der Ansprüche 7 bis 9, wobei die Vorgänge ferner Folgendes umfassen:
Erzeugen einer Benutzeroberfläche, die eine auswählbare Option beinhaltet, um die Datenstruktur zu erzeugen, die die Transkription des Gegenstands für einen Sprachbefehl-Auslösebegriff und die Audiodaten des Gegenstands für einen Sprachbefehl-Auslösebegriff beinhaltet; und
Empfangen von Daten, die eine Auswahl der ausgewählten Option angeben, um die Datenstruktur zu erzeugen,
wobei die Datenstruktur in Reaktion auf das Empfangen der Daten, die die Auswahl der auswählbaren Option angeben, erzeugt wird, um die Datenstruktur zu erzeugen.

11. System nach einem der Ansprüche 7 bis 10, wobei die Vorgänge ferner Folgendes umfassen:
Erzeugen von Zeitdaten für jeden Gegenstand der Transkription der Äußerung, wobei die Audiodaten des Gegenstands für einen Sprachbefehl-Auslösebegriff basierend auf den Zeitdaten isoliert werden.

12. System nach Anspruch 11, wobei die Zeitdaten für jeden Begriff eine verstrichene Zeit von einem Beginn der Äußerung bis zu einem Beginn des Begriffs und eine verstrichene Zeit vom Beginn der Äußerung bis zu einem Beginn eines folgenden Begriffs identifizieren.

13. Nichttransitorisches computerlesbares Medium, das Software speichert, die Anweisungen umfasst, die durch einen oder mehrere Prozessoren ausführbar sind, die bei einer solchen Ausführung eine oder mehrere Rechenvorrichtungen (105), die den einen oder die mehreren Prozessoren umfassen, veranlassen, ein Verfahren gemäß einem der Ansprüche 1 bis 6 durchzuführen.

## Revendications

1. Procédé de découpage audio mis en œuvre par ordinateur comprenant :
la réception (310) de données audio qui correspondent à un énoncé ;
la génération (320) d'une transcription de l'énoncé ;
la classification (330) d'une première partie de la transcription en tant que terme déclencheur de commande vocale et d'une deuxième partie de la transcription en tant qu'objet du terme déclencheur de commande vocale ;
l'identification d'une langue du terme déclencheur de commande vocale et d'une langue de l'objet du terme déclencheur de commande vocale ;
le fait de déterminer (340) s'il faut isoler l'objet du terme déclencheur de commande vocale sur la base de deux facteurs, le premier facteur étant que le terme déclencheur de commande vocale correspond à un terme déclencheur de commande vocale pour lequel un résultat de traitement doit comporter à la fois une transcription d'un objet du terme déclencheur de commande vocale et des données audio de l'objet du terme déclencheur de commande vocale dans une structure de données générée et le second facteur étant que l'objet du terme déclencheur de commande vocale a été prononcé dans une langue différente des autres parties de l'énoncé ;
sur la base du résultat de la détermination (340), l'isolement (350), à partir des données audio correspondant à l'énoncé, des données audio de l'objet du terme déclencheur de commande vocale ;
la génération (360) d'une structure de données qui comporte la transcription de l'objet du terme déclencheur de commande vocale et les données audio de l'objet du terme déclencheur de commande vocale ; et
la transmission de la structure de données à un destinataire.

2. Procédé selon la revendication 1, comprenant :
la classification d'une troisième partie de la transcription comme destinataire de l'objet du terme déclencheur de la commande vocale.

3. Procédé selon l'une quelconque des revendications précédentes, dans lequel :
le terme déclencheur de commande vocale est une commande pour envoyer un message texte, et l'objet du terme déclencheur de commande vocale est le message texte.

4. Procédé selon l'une quelconque des revendications précédentes, comprenant :
la génération d'une interface utilisateur qui comporte une option sélectionnable pour générer la structure de données qui comporte la transcription de l'objet du terme déclencheur de commande vocale et les données audio de l'objet du terme déclencheur de commande vocale ; et
la réception de données indiquant une sélection de l'option sélectionnable pour générer la structure de données,
dans lequel la structure de données est générée en réponse à la réception des données indiquant la sélection de l'option sélectionnable pour générer la structure de données.

5. Procédé selon l'une quelconque des revendications précédentes, comprenant :
la génération de données de synchronisation pour chaque terme de la transcription de l'énoncé, dans lequel les données audio de l'objet du terme déclencheur de commande vocale sont isolées sur la base des données de synchronisation.

6. Procédé selon la revendication 5, dans lequel les données de synchronisation pour chaque terme identifient un temps écoulé depuis le début de l'énoncé jusqu'au début du terme et un temps écoulé depuis le début de l'énoncé jusqu'au début d'un terme suivant.

7. Système comprenant :
un ou plusieurs dispositifs informatiques (105) comprenant un ou plusieurs processeurs et un ou plusieurs dispositifs de stockage stockant des instructions qui, lorsqu'elles sont exécutées par les un ou plusieurs dispositifs informatiques, amènent les un ou plusieurs ordinateurs à exécuter des opérations comprenant :
la réception de données audio qui correspondent à un énoncé ;
la génération d'une transcription de l'énoncé ;
la classification d'une première partie de la transcription en tant que terme déclencheur de commande vocale et d'une deuxième partie de la transcription en tant qu'objet du terme déclencheur de commande vocale ;
l'identification d'une langue du terme déclencheur de commande vocale et d'une langue de l'objet du terme déclencheur de commande vocale ;
le fait de déterminer s'il faut isoler l'objet du terme déclencheur de commande vocale sur la base de deux facteurs, le premier facteur étant que le terme déclencheur de commande vocale correspond à un terme déclencheur de commande vocale pour lequel un résultat de traitement doit comporter à la fois une transcription d'un objet du terme déclencheur de commande vocale et des données audio de l'objet du terme déclencheur de commande vocale dans une structure de données générée et le second facteur étant que l'objet du terme déclencheur de commande vocale a été prononcé dans une langue différente des autres parties de l'énoncé ;
sur la base du résultat de la détermination, l'isolement, à partir des données audio correspondant à l'énoncé, des données audio de l'objet du terme déclencheur de commande vocale ;
la génération d'une structure de données qui comporte la transcription de l'objet du terme déclencheur de commande vocale et les données audio de l'objet du terme déclencheur de commande vocale ; et
la transmission de la structure de données à un destinataire.

8. Système selon la revendication 7, dans lequel les opérations comprennent également :
la classification d'une troisième partie de la transcription comme destinataire de l'objet du terme déclencheur de la commande vocale.

9. Système selon l'une quelconque des revendications 7 à 8, dans lequel :
le terme déclencheur de commande vocale est une commande pour envoyer un message texte, et
l'objet du terme déclencheur de commande vocale est le message texte.

10. Système selon l'une quelconque des revendications 7 à 9, dans lequel les opérations comprennent également :
la génération d'une interface utilisateur qui comporte une option sélectionnable pour générer la structure de données qui comporte la transcription de l'objet du terme déclencheur de commande vocale et les données audio de l'objet du terme déclencheur de commande vocale ; et
la réception de données indiquant une sélection de l'option sélectionnable pour générer la structure de données,
dans lequel la structure de données est générée en réponse à la réception des données indiquant la sélection de l'option sélectionnable pour générer la structure de données.

11. Système selon l'une quelconque des revendications 7 à 10, dans lequel les opérations comprennent également :
la génération de données de synchronisation pour chaque terme de la transcription de l'énoncé, dans lequel les données audio de l'objet du terme déclencheur de commande vocale sont isolées sur la base des données de synchronisation.

12. Système selon la revendication 11, dans lequel les données de synchronisation pour chaque terme identifient un temps écoulé depuis le début de l'énoncé jusqu'au début du terme et un temps écoulé depuis le début de l'énoncé jusqu'au début d'un terme suivant.

13. Support non transitoire lisible par ordinateur stockant un logiciel comprenant des instructions exécutables par un ou plusieurs processeurs qui, lors de cette exécution, amènent un ou plusieurs dispositifs informatiques (105) comprenant les un ou plusieurs processeurs à exécuter un procédé selon l'une quelconque des revendications 1 à 6.
